(19)

Europäisches
Patentamt
European
Patent Office
Office européen
des brevets

(11)　**EP 2 199 763 B1**

(12)　　　　**EUROPEAN PATENT SPECIFICATION**

(45) Date of publication and mention
of the grant of the patent:
**27.06.2012　Bulletin 2012/26**

(51) Int Cl.:
***G01F 23/284*** *(2006.01)*　***G01F 23/296*** *(2006.01)*
***G01F 25/00*** *(2006.01)*

(21) Application number: **08172559.0**

(22) Date of filing: **22.12.2008**

(54) **Level Measurement Arrangement**

Pegelmessanordnung

Agencement de mesure de niveau

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**23.06.2010　Bulletin 2010/25**

(73) Proprietor: **Endress+Hauser GmbH+Co. KG
79689 Maulburg (DE)**

(72) Inventors:
• **Krause, Michael
68753, Waghäusel (DE)**

• **Böhler, Michael
79588, Efringen-Kirchen (DE)**
• **Hudson, Alan
DLI61YF, Spennymoor (GB)**

(74) Representative: **Andres, Angelika Maria
Endress+Hauser (Deutschland) AG+Co. KG
PatServe
Colmarer Strasse 6
79576 Weil am Rhein (DE)**

(56) References cited:
**EP-A- 1 785 701　GB-A- 2 443 533
US-A- 4 210 969**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background and Summary of the Invention

The present invention concerns an arrangement for measurement of a level of a medium in a container, comprising a level measurement device comprising a process connector for mounting said device on an opening of the container, an antenna for transmitting signals into said container and for receiving echo signals resulting from reflections of the transmitted signals inside the container, and a measurement electronic, for determining the level of the medium based on a measurement of a transit time needed for the signal to travel to the surface of the medium and of its echo to return to the device.

In many branches of industry products are stored or processed in containers, e.g. tanks, vessels or others. It has become a very important field of measurement technology to determine a level of a medium inside a container. Level measurements are valuable means in process control as well as in process automation.

One method of level measurement used today involves the use of short electromagnetic waves, in particular microwaves. Microwave level measurement devices transmit microwave signals through an opening in the container toward the surface of the medium inside and receive echo signals of the transmitted microwaves. From the received echo signals an echo function representing echo amplitude as a function of the distance or time is formed for each measurement. A transit time of a microwave signal to travel from the device to the surface and of its echo to return to the device is determined based on the echo function. The distance between the device and the surface is then determined based on the transit time.

Various microwave level measuring techniques are known which permit short distances to be measured by means of reflected waves. The most frequently used systems are pulse radar and frequency-modulated continuous wave radar (FMCW-Radar).

Pulse radar level measurement devices periodically send short microwave pulses. The transit time between the transmission of the microwave pulse and the reception of its echo is measured and the level is determined based on the transit time.

FMCW radar level measurement devices transmit a continuous microwave signal, which is periodically linearly frequency modulated. The frequency of the received echo signal differs from the frequency of the transmitted signal by an amount, which depends on the transit time between the emission and the reception of the corresponding echo.

The microwave signals are transmitted and received via antennas. Commonly used antennas are for example horn antennas comprising a metal horn, rod antennas comprising a dielectric rod or planar antennas using microstrip line technology, as for example described in US-B1 6,266,022.

Other measurement device are on the marked for measurement of a level of a medium inside a container based on a measurement of a transit time needed for a signal to travel from the device to the surface of the medium and of its echo signal, caused by a reflection of the transmitted signal on the surface, to return to the device. These devices are for example ultrasonic level measurement devices transmitting and receiving ultrasonic signals, or optical measurement devices transmitting and receiving optical signals.

In many branches of industry, in particular in the oil and gas industry, safety, reliability and/or measurement accuracy of measurement devices is very important. To this extend it is necessary to ensure, that the devices operate properly and that the accuracy of their measurement results lies within a predefined range at all times. Safety requirements frequently require that proper operation and measurement accuracy of such measurement devices are tested regularly.

Regular tests can for example be performed on specially designed test sites. This requires for the measurement device to be transferred from the measurement site onto the test site.

Alternatively, proper operation and accuracy of the measurement can for example be tested, by raising the level of the medium inside the container on the measurement site to a predefined test level. The level measurement device then measures this level and the measurement result is compared to the known predefined test level. In order to raise the level to the predefined test level, the ongoing production process needs to be interrupted and the predefined test level needs to be determined by another measurement, independently of the measurement device to be tested.

In US 2005/0264440 A1 a test apparatus for a waveguide level sensing device is described. The waveguide level sensing device transmits electromagnetic pulses along a waveguide into a container and receives an echo signal of this pulse resulting from a reflection of the pulse on the surface of the level inside the waveguide. The test apparatus comprises a bridge, which can be moved into a test position, wherein the bridge bridges the waveguide during a test period. If the device functions properly, it will indicate a level corresponding to the level of the bride during test period. After each test period the bridge is moved into a storage position where the waveguide is not bridged. During the test period no level measurements can be performed.

In US 4 210 969 a sonic ranging system for eliminate errors due to variation in the sound velocity in the medium is described. A sound ranging system increases the precision of range measurement by automatically correcting for any variation in the velocity of sound in the medium. The automatic correction for the sound velocity utilizes a small sound reflecting target located at a precise fixed distance from the transducer surface. The transducer is provided with an extension L-shaped rod member which is rigidly attached to the transducer housing structure by welding, or by any other suitable means. A small disc, which acts as a sound reflecting target, is rigidly attached to the rod member, so that the flat reflecting surface of the target is located perpendicular to the axis of the transducer.

In GB 2 443 533 A a distance sensor with movable reference plate is described. This distance measuring apparatus includes a range sensor, e.g. ultrasonic, laser or microwave level sensor, and a reference reflection plate which can be moveably positioned at first and second positions which are a known distance apart. The reflection plate may be fixed to a moveable rod provided with locating lugs.

All these testing methods have in common, that measurements of the level inside the container cannot be performed during the test period.

On the other hand, there is a need in industry, for continuous measurement of the level. This is especially important, e.g. in applications, where the level measurement is used for process control, e.g. in order to prevent an overflow. It is an object of the invention to provide a level measurement arrangement comprising a level measurement device for measuring a level of a medium inside a container based on a measurement of a transit time needed for a signal to travel from the device to the surface of the medium and of its echo signal, caused by a reflection of the transmitted signal on the surface, to return to the device, which can be tested during normal measurement operation.

To this end the invention comprises an arrangement for measurement of a level of a medium in a container, comprising:

- a level measurement device comprising:

  - a process connector for mounting said device on an opening of the container,
  - an antenna for transmitting signals into said container and for receiving echo signals resulting from reflections of the transmitted signals inside the container,

- an apparatus for testing proper operation and/or measurement accuracy of the level measurement device, comprising:

  - a reflector,
  - mounting means mounted onto the process connector for mounting the reflector at an insertion height inside the container above the medium at which the reflector is inserted into a transmission lobe of the transmitted signals and covers a fraction of a cross-section of the transmission lobe of the transmitted signals, and

- a test and measurement electronic,

- for determining the level of the medium based on a transit time needed for the signals to travel to the surface of the medium and for their echo signals to return to the device, and
- for testing the level measurement device based on a transit time needed for the signals to travel to the reflector and for their echo signals to return to the device, wherein - the mounting means comprise an elongated holder

extending through the process connector into the container,

- a length of a section of said holder extending into the container is adjustable,
- the reflector is mounted onto an end of the holder inside the container, and
- the insertion height at which the reflector is located inside the container is determined by the adjustable length of this section,

wherein

- the mounting means comprise an elongated holder comprising a telescopic rod of adjustable length extending into the container,
- the reflector is mounted onto an end of the telescopic rod, and
- the adjustable length determines the insertion height of the reflector,

or wherein

- the mounting means comprise a foldable holder comprising:

  - segments, which are interconnected by hinges to form a foldable rod, and
  - a rod shaped end section which is permanently located inside the container,

- the end section is connected to a first end of the foldable rod,
- mounting means are foreseen for mounting the holder onto the process connector, comprising

  - an opening through which a selectable number of the segments can be inserted through the process connector into the container,

- the segments which are located inside the container form a straight rod,
- the segments which are located outside the container are folded together,
- the reflector is mounted onto the end section, and
- the insertion height at which the reflector is inserted inside the container is determined by the selected number of the segments inserted into the container.

According to a preferred embodiment, the reflector is a flat disc having a long thin rectangular cross section.

According to a refinement of the invention,

- two reflectors are mounted on the mounting means at two different insertion heights above the medium inside the container,
- each reflector is inserted into said transmission lobe of the transmitted signals and covers a fraction of a cross-section of the transmission lobe of the transmitted signals at its insertion height, and
- both reflectors are exposed to a fraction of the transmitted signal.

According to a preferred embodiment of the invention, the signals are microwave signals.

The invention further comprises a further method of operating an arrangement for measurement of a level of a medium in a container,
wherein a level measurement device is mounted on an opening of the container by a process connector,
wherein signals are transmitted into said container and echo signals are received resulting from reflections of the transmitted signals inside the container by an antenna,
wherein a proper operation and/or a measurement accuracy of the level measurement device is tested by an apparatus,
wherein a reflector is mounted by a mounting means onto the process connector at an insertion height inside the container above the medium at which the reflector is inserted into a transmission lobe of the transmitted signals and covers a fraction of a cross-section of the transmission lobe of the transmitted signals, and

- a test and measurement electronic,
- for determining the level of the medium (1) based on a transit time needed for the signals to travel to the surface of the medium and for their echo signals to return to the device, and
- for testing the level measurement device based on a transit time needed for the signals to travel to the reflector and for their echo signals to return to the device,

, wherein

- the insertion height of the reflector is adjustable,
- level is measured with the measurement device and
- the insertion height of the reflector is adjusted based on the level measured, such that the reflector is located above the previously measured level of the medium.

It is an advantage of the invention, that the insertion height at which the reflector is inserted into the transmission lobe is adjustable. Measurement accuracy of the device can thus be tested and approved for various different distances between the device and the reflector.
The invention and its advantages are explained in more detail using the figures of the drawing, in which four embodiments are shown. The same reference numerals refer to the same elements throughout the figures.

Brief Description of the Drawings

Fig. 1 shows: a microwave level measurement arrangement according to the state of the art;

Fig. 2 shows: the reflector of fig. 1 and a cross-section of the transmission lobe at the insertion height of the reflector;

Fig. 3 shows: a holder for the reflector comprising a telescopic rod of adjustable length;

Fig. 4 shows: a foldable holder for inserting the reflector at different predetermined insertion heights;

Fig. 5 shows: an example of an echo function derived with the arrangement shown in fig. 1;

Fig. 6 shows: a microwave level measurement arrangement according to the invention comprising two reflectors;

Fig. 7 shows: the reflectors of fig. 5 and their partially overlapping positions within the cross sections of the transmission lobe at their respective insertion height; and

Fig. 8 shows: an echo function derived with the measurement arrangement according to fig. 6.

Detailed Description of the Drawings

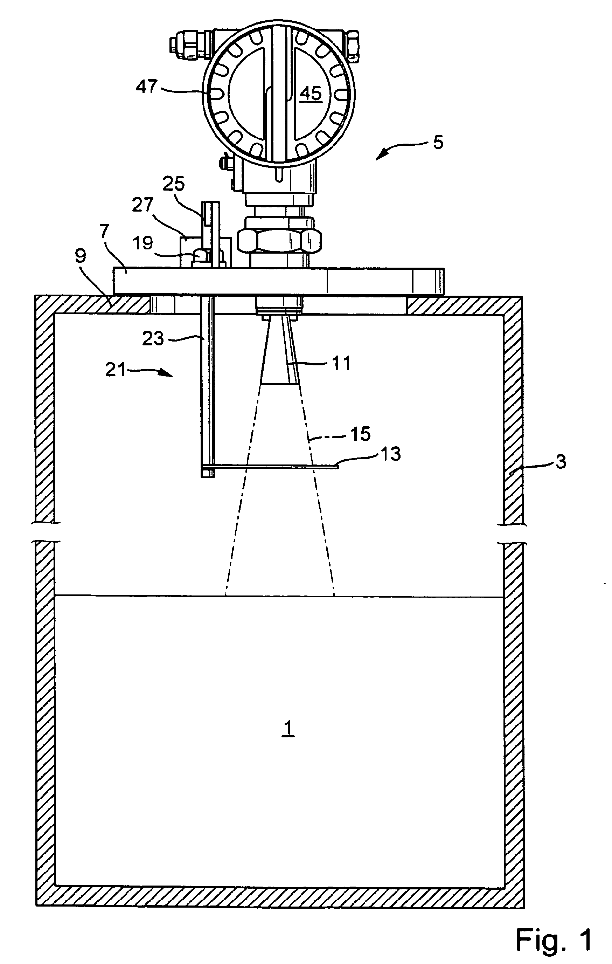

Fig. 1 shows a level measurement arrangement for measurement of a level of a medium 1 in a container 3 according to the state of the art of GB 2 443 533 A. It comprises a level measurement device 5, which is mounted onto an opening on the container 3 via a process connector 7. The measurement device 5 is for example a pulse radar measurement device or an FMCW level measurement device as described above.
Even though the invention is described in detail below using a microwave level measurement device it is not limited to arrangements comprising microwave level measurement devices. Instead of the microwave level measurement device 5 other level measurement devices can be used in the arrangements according to the invention, as long as they are designed to measure level by measuring a transit time needed for a signal to travel from the device to the surface of the medium and of its corresponding echo signal, generated by a reflection of the transmitted signal on this surface, to return to the device. Such devices are for example ultrasonic level measurement devices transmitting and receiving ultrasonic signals, or optical measurement devices transmitting and receiving optical signals.

In the example shown, the process connector 7 is a flange, which is mounted onto a corresponding counter part 9 surrounding the opening of the container 3. The measurement device 5 comprises an antenna 11 for transmitting microwave signals into the container 3 and for receiving their echo signals resulting from reflections of the transmitted microwave signals inside the container 3. The antenna 11 is for example a horn antenna as shown in fig. 1. Alternatively other types of antennas known in the field can be used, designed to transmit microwave signals into free space and to receive their echo signals, e.g. rod antennas comprising a dielectric rod or planar antennas using microstrip line technology.

The arrangement further comprises an apparatus for testing the microwave level measurement device 5, in particular for testing the proper operation and/or measurement accuracy of the device 5.

Central element of this apparatus is a reflector 13 which is inserted into a transmission lobe 15 of the transmitted microwave signals at a predetermined preferably adjustable insertion height inside the container 3. The transmission lobe 15 has the shape of a three dimensional cone as indicated in fig. 1 by a dashed line. The reflector 13 is dimensioned such, that it covers a fraction of a cross-section 17 of the transmission lobe 15 at its insertion height.

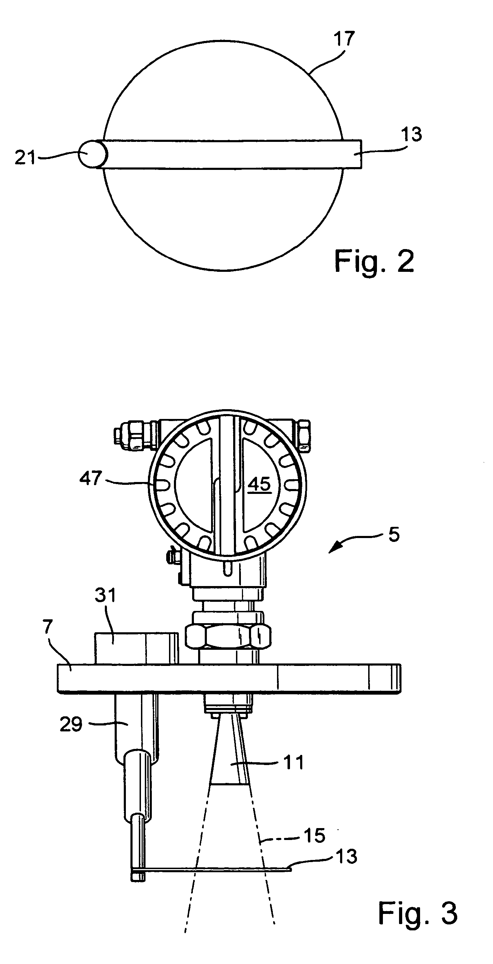

Fig. 2 shows the cross-section 17 of the transmission lobe 15 at the insertion height shown in fig. 1 and an exemplary embodiment of reflector 13. The cross-section 17 of the transmission lobe 15 is circular and the reflector 13 is a flat disc, having a long thin rectangular cross section.

Mounting means are foreseen for mounting the reflector 13 inside the container 3 above the medium 1. The mounting means are mounted onto the process connector 7 via connector 19. This has the advantage, that the reflector 13 can be mounted together with the measurement device 5 and no separate openings need to be provided on the container 3. In the embodiment shown in fig. 1, the mounting means comprise an elongated rod shaped holder 21, which extends through the process connector 7 into the container 3, such that a section 23 of the holder 21 is located inside and a section 25 of the holder 21 is located outside the container 3. The reflector 13 is mounted on a bottom end of the holder 21 inside the container 3 and extends perpendicular to a longitudinal axis of the holder 21. The insertion height of the reflector 13 is given by the length of the section 23 of the holder 21 extending into the container 3. Preferably connector 19 is a releasable connector which allows for the length of the section 23 inside the container 3 to be adjusted by pushing the holder 21 further into the container 3 or by pulling it further out of the container 3. By adjusting the length of the section 23 of the holder 21 inside the container 3 and fixing the holder 21 in a chosen or predetermined position via the connector 19, the insertion height of the reflector 13 can be adjusted. The holder 21 can be positioned and fixed manually or by a positioning device 27, e.g. an actuator or motor attached to the holder 21 including the connector 19.

Instead of the holder 21 a holder 29 can be used comprising a telescopic rod of adjustable length, as shown in fig. 3. The telescopic rod is e.g. entirely located inside the container 3 and mounted onto the process connector 7. Length adjustment can for example be performed by a hydraulic system 31 mounted outside the container 3 on the process connector 7 and connected to the telescopic rod on the inside, via an opening in the process connector 7.

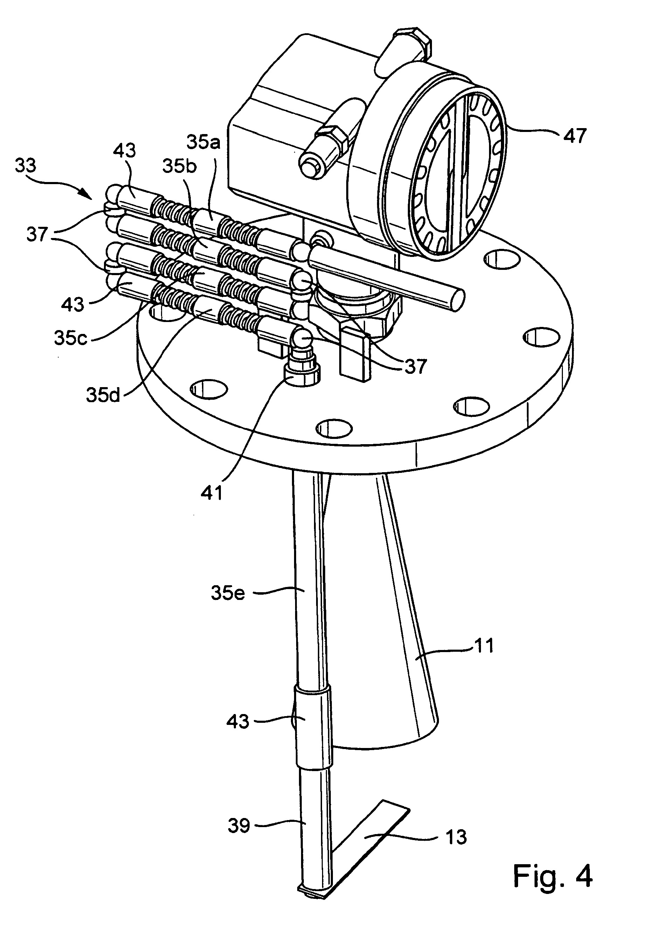

Fig. 4 shows a further embodiment of mounting means for mounting the reflector 13 at different predetermined insertion heights inside the container 3. Here mounting means comprise a foldable holder 33 for inserting the reflector 13 at different predetermined insertion heights. The holder 33 consists of rod shaped segments 35, here segments 35a, 35b, 35c, 35d and 35e, which are interconnected by hinges 37 to form a foldable rod, and a rod shaped end section 39. The end section 39 is permanently located inside the container 3 and connected to a first end of the foldable rod, e.g. by an additional hinge.

Mounting means 41, are foreseen for mounting the holder 33 onto an opening extending through the process connector 7. The mounting means 41 comprise an opening through which a selectable number of the segments 35 can be inserted through the process connector 7 into the container 3. The segments 35e which are inserted into the container 3 form a straight rod, extending in a straight line with the end section 39 connected thereto. Preferably hollow cylindrical caps 43 are foreseen on the holder 33 near each hinge 37, which slide over the respective hinge 37 due to gravity when the hinge 37 is straightened and brought into a vertical position for insertion. The caps 43 then prevent any further movement of the respective hinge 37 after its insertion into the container 3. The remaining segments 35a, 35b, 35c, and 35d, which are located outside the container 3 are folded together.

The reflector 13 is mounted onto the end section 39. Thus the insertion height at which the reflector 13 is inserted inside the container 3 is determined by the selected number of the segments 35e inserted into the container 3.

The arrangement further comprises a test and measurement electronic 45. The electronic 45 is for example located inside a housing 47 of the level measurement device 5 attached to the process connector 7 and is connected to the antenna 11 of the device 5. The electronic 45 comprises a microwave signal generator for generating the microwave signals and supplies them to the antenna 11 for transmission. Transmitted signals are reflected at reflective surfaces inside the container 3 and their respective echo signals are received by the antenna 11 and supplied to the electronic 45. A transit time t needed for a microwave signal to travel to a reflective surface and of its echo signal to return to the device 5 is proportional to the distance between the reflective surface and the device 5. Given the propagation velocity of microwave signals inside the container 3, distance can be calculated from transit time t and vice versa. Based on the echo signals received by the antenna 11, the electronic 45 e.g. determines an echo function representing an echo amplitude $A(t)$ of the echo signal as a function of the distance or the transit time t. Distance and transit time t are equivalent.

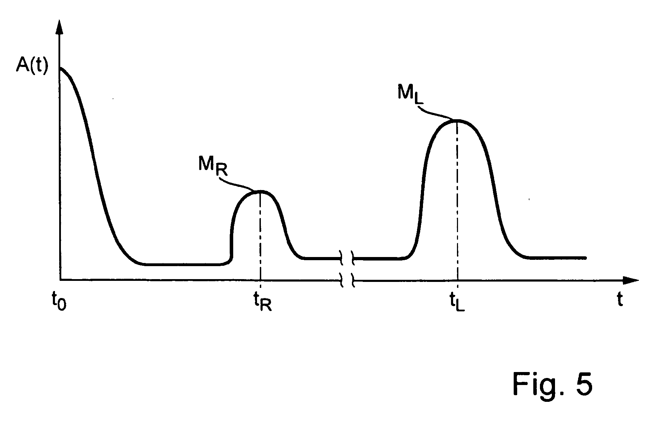

Fig. 5 shows an example of an echo function $A(t)$ determined with the arrangement shown in fig. 1 with reflector 13 inserted into the transmission lobe 15. It shows two distinct maxima. The microwave signal is transmitted at time to. The first maximum $M_R$ is caused by a reflection of the microwave signal on reflector 13 and occurs at a corresponding transit time $t_R$ needed to travel from the device 5 to the reflector 13 and to return to the device 5. The second maximum $M_L$ is caused by a reflection of the microwave signal on the surface of the medium 3 and occurs at a corresponding transit time $t_L$ needed to travel from the device 5 to the surface of the medium 1 and to return to the device 5. The transit time $t_R$ at which the first maximum $M_R$ occurs corresponds to the insertion height of the reflector 13 and the transit time $t_L$ at which the second maximum $M_L$ occurs corresponds to the level of the medium 1 inside the container 3.

Since the reflector 13 only covers a fraction of the cross section of the transmission lobe 15 at its insertion height, only a fraction of the transmitted microwave signal is reflected at the reflector 13, whereas the main part of the signal reaches the surface of the medium 1. Consequently it is possible to measure both the insertion height of the reflector 13 as well as the level of the medium 1 simultaneously. The ongoing level measurement does not need to be interrupted in order to test proper operation and/or measurement accuracy of the device 5.

The electronic 45 determines the level of the product based on the transit time $t_L$ needed for the microwave signal to travel to the surface of the medium 1 and of its echo signal to return to the device 5. In addition it determines the transit time $t_R$ needed for the microwave signal to travel to the reflector 13 and of its echo signal to return to the device 5. The later transit time $t_R$ is then used to test the level measurement device 5, in particular its proper operation and its measurement accuracy. The capability of the device 5 to measure this time of flight $t_R$

proves that the device 5 functions properly. A measured insertion height is calculated based on the measured transit time $t_R$. Measurement accuracy of the device 5 is then determined by comparing the measured insertion height of the reflector 13 with the known predetermined insertion height, at which the reflector 13 is actually inserted.

The level measurement arrangement according to the invention can for example be operated by permanently inserting the reflector 13 into the transmission lobe 15 of the transmitted microwave signals at a predetermined insertion height. In this case the insertion height can be permanently stored in a memory of the electronic 45 upon installation of the arrangement and proper operation and/or measurement accuracy of the measurement device 45 can be continuously monitored by measuring the insertion height of the reflector 13 with the measurement device 5 and comparing the measured insertion height with the predetermined insertion height of the reflector 13. Thus the device 5 permanently performs self tests. It does so fully automatically without any intervention from operating personal. The self tests can be used to certify that the measurement accuracy lies within a predetermined range, and to set off an alarm or warning if it does not. In addition measurement accuracy can be monitored and recorded as a function of operating hours or life time of the device 5. In case the accuracy decreases with the time, a prediction can be made, at what time during the life span of the device 5, it will exceed the predetermined measurement accuracy and replacement or repair of the device 5 can be timed based on this prediction.

Alternatively, the measurement arrangement can be operated by consecutively installing the reflector 13 at predetermined different insertion heights. This allows not only to determine the measurement accuracy but also to determine the accuracy as a function of the adjustable distance between the reflector 13 and the device 5. In this case information about the actual insertion height needs to be transferred to electronic 45 either manually or automatically, e.g. via a control that sets the insertion height via the positioning device 27, e.g. the actuator or the motor, or the hydraulic system 31. This control can be an integral part of the electronic 45 which is connected to the positioning device 27 or the hydraulic system 31 respectively.

During tests, the reflector 13 needs to be located above the medium 1. For this reason reflectors with a fixed insertion height can only be located above the highest possible level inside the container 3. With the described holders 21, 29, 33 which allow the insertion height to be adjusted, it is possible to perform tests at insertion heights below this highest level, as long as it located above the level of the medium currently present in the container 3. This can be easily assured by the arrangement according to the invention by simply measuring the level of the medium 1 and adjusting the adjustable insertion height accordingly such that the reflector 13 is always located well above the previously measured level of the medium 1. This makes it possible to monitor the measurement accuracy of the device 5 not only in designated test areas well above the highest possible level but also in areas in which later level measurements are required. If the container 3 is emptied during the normal ongoing production process, it is even possible to test the measurement accuracy of the device 5 over the entire measurement range reaching from the bottom of the container 3 up to the highest possible level.

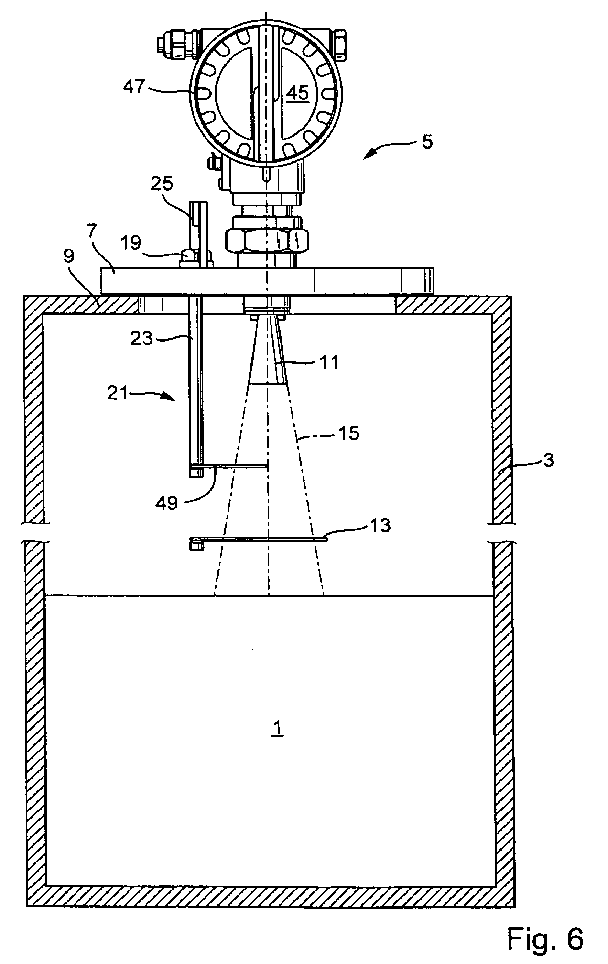

Fig. 6 shows another embodiment of an arrangement according to the invention. Due to the similarities to the previously described embodiment only the differences are described in detail below. In this embodiment two reflectors are foreseen, the previously described reflector 13 and an additional reflector 49. The two reflector 13, 49 are mounted onto the mounting means, here holder 21, attached to the process connector 7. They are located at two different insertion heights above the medium 1 inside the container 3.

Each reflector 13, 49 is inserted into the transmission lobe 15 of the transmitted microwave signals and covers a fraction of a cross-section 17, 51 of the transmission lobe 15 of the transmitted microwave signals at its insertion height. The reflectors 13, 49 and the cross sections 17, 51 covered by them are positioned and dimensioned such that both reflectors 13, 49 are at least partially exposed to a fraction of the transmitted microwave signals.

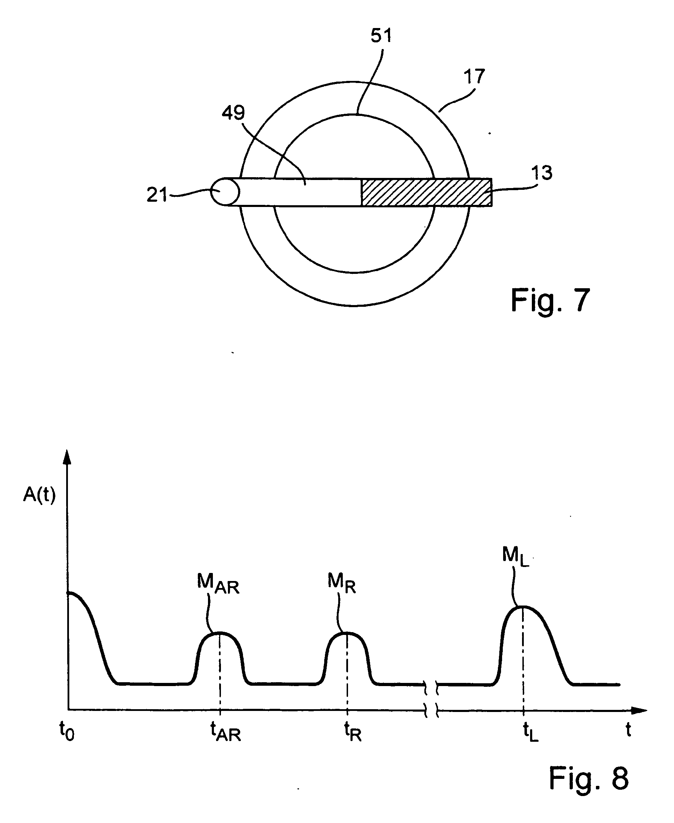

In the embodiment shown in fig. 6 reflector 13 and additional reflector 49 are both disc shaped and have a thin long rectangular cross section. The additional reflector 49 is positioned above the reflector 13 and extends from the holder 21 into the middle of the transmission lobe 15. Reflector 13 has the same shape and runs parallel to the additional reflector 49 across the entire width of the transmission lobe 15 at its insertion height. Fig. 7 shows the reflector 13, the additional reflector 49 and their partially overlapping positions within the cross section 17 of the transmission lobe 15 at the insertion height of reflector 13 and within the cross section 51 of the transmission lobe 15 at the insertion height of the additional reflector 49 as seen from above. Obviously various other designs and reflector positions can be chosen, as long as both the reflector 13 and the additional reflector 49 are exposed to a fraction of the transmitted microwave signal.

Fig. 8 shows a corresponding echo function A (t) derived with the measurement arrangement shown in fig. 6. It shows three distinct maxima, a first maximum $M_{AR}$ occurring at a transit time $t_{AR}$ corresponding to the distance between the device 5 and the additional reflector 49, the second maximum $M_R$ occurring at a transit time $t_R$ corresponding to the distance between the device 5 and the reflector 13, and the third maximum $M_L$ occurring at a transit time $t_L$ corresponding to the distance between the device 5 and the surface of the medium 1.

Permanently inserting two reflectors 13, 49 obviously allows the operator to monitor the measurement accuracy of the device 5 at two different heights inside the container 3.

In addition the two reflectors 13, 49 enable the device 5 to calibrate itself. Calibration of the device 5 is performed by measuring the transit times $t_{AR}$, $t_R$ needed for the microwave signals to travel from the device 5 to each of the reflectors 13, 49 and for the respective echo signals to return to the device 5. The device 5 then calculates the propagation velocity v of the microwave signals inside the container 3 above the medium 1 based on these transition times $t_{AR}$, $t_R$ and the known distance between the two insertion heights of the two reflectors 13, 49. The propagation velocity v is determined by the following equation:

$$v = 2\ D/(t_R\text{-}t_{AR})$$

wherein

D        is the distance between the insertion height of the two reflectors, and

$t_R$-$t_{AR}$    is the difference between the two measured times of flight.

This propagation velocity v is then used for determining the level of the medium 1 inside the container 3 based on the measured transit time $t_L$ needed for the microwave signal to travel from the device 5 to the surface of the medium and for its echo signal to return to the device 5.

Thus this arrangement not only allows to monitor the measurement accuracy of the measurement device 5 but also to calibrate it by determining the propagation velocity v used to calculate the level based on the transit time.

This calibration method is especially advantages in applications, wherein the propagation velocity v of the microwave signals may vary over time. This is for example the case in applications, wherein a pressure, a temperature and a composition of a gas, which fills the interior of the container 3 above the medium 1 may vary in accordance with an ongoing production process. In this case regular or repeated re-calibration ensures a high measurement accuracy.

1        medium

3        container

5        level measurement device

7        process connector

9        counter part for process connector

11 antenna

13 reflector

15 transmission lobe

17 cross-section of the transmission lobe at the insertion height of the reflector

19 connector

21 rod shaped holder

23 section of holder inside the container

25 section of holder outside the container

27 positioning device

29 holder comprising a telescopic rod

31 hydraulic system

33 holder

35 segment

37 hinges

39 end section

41 mounting means

43 cap

45 test and measurement electronic

47 housing

49 additional reflector

51 cross-section of the transmission lobe at the insertion height of the additional reflector

**Claims**

1. Arrangement for measurement of a level of a medium (1) in a container (3), comprising:

   - a level measurement device (5) comprising:

     - a process connector (7) for mounting said device on an opening of the container (3),
     - an antenna (11) for transmitting signals into said container (3) and for receiving echo signals resulting from reflections of the transmitted signals inside the container (3),

- an apparatus for testing proper operation and/or measurement accuracy of the level measurement device (5), comprising:

     - a reflector (13, 49),
     - mounting means mounted onto the process connector (7) for mounting the reflector (13, 49) at an insertion height inside the container (3) above the medium (1) at which the reflector (13, 49) is inserted into a transmission lobe (15) of the transmitted signals and covers a fraction of a cross-section (17, 51) of the transmission lobe (15) of the transmitted signals, and

   - a test and measurement electronic (45),

     - for determining the level of the medium (1) based on a transit time ($t_L$) needed for the signals to travel to the surface of the medium (1) and for their echo signals to return to the device (5), and
     - for testing the level measurement device (5) based on a transit time ($t_R$, $t_{AR}$) needed for the signals to travel to the reflector (13, 49) and for their echo signals to return to the device (5),

**characterised in that**

   - the mounting means comprise an elongated holder (21) extending through the process connector (7) into the container (3),
   - a length of a section (23) of said holder (21) extending into the container (3) is adjustable,
   - the reflector (13) is mounted onto an end of the holder (21) inside the container (3), and
   - the insertion height at which the reflector (13) is located inside the container (3) is determined by the adjustable length of this section (23),

wherein

   - the mounting means comprise an elongated holder (29) comprising a telescopic rod of adjustable length extending into the container (3),
   - the reflector (13) is mounted onto an end of the telescopic rod, and
   - the adjustable length determines the insertion height of the reflector (13).,

or wherein

   - the mounting means comprise a foldable holder (33) comprising:

     - segments (35), which are interconnected by hinges (37) to form a foldable rod, and

- a rod shaped end section (39) which is permanently located inside the container (3),

- the end section (39) is connected to a first end of the foldable rod,
- mounting means (41) are foreseen for mounting the holder (33) onto the process connector (7), comprising:

-- an opening through which a selectable number of the segments (35) can be inserted through the process connector (7) into the container (3),

- the segments (35e) which are located inside the container (3) form a straight rod,
- the segments (35a, 35b, 35c, 35d) which are located outside the container (3) are folded together,
- the reflector (13) is mounted onto the end section (39), and
- the insertion height at which the reflector (13) is inserted inside the container (3) is determined by the selected number of the segments (35e) inserted into the container (3).

2. Arrangement according to claim 1, wherein the reflector (13, 49) is a flat disc having a thin long rectangular cross section.

3. Arrangement according to claim 1, wherein

- two reflectors (13, 49) are mounted on the mounting means at two different insertion heights above the medium (1) inside the container (3),
- each reflector (13, 49) is inserted into the transmission lobe (15) of the transmitted signals and covers a fraction of a cross-section (17, 51) of the transmission lobe (15) of the transmitted signals at its insertion height, and
- both reflectors (13, 49) are exposed to a fraction of the transmitted signal.

4. Arrangement according to one of the previous claims, wherein the signals are microwave signals.

5. Method of operating an arrangement for measurement of a level of a medium (1) in a container (3), wherein a level measurement device (5) is mounted on an opening of the container (3) by a process connector (7),
wherein signals are transmitted into said container (3) and echo signals are received resulting from reflections of the transmitted signals inside the container (3) by an antenna (11),
wherein a proper operation and/or a measurement accuracy of the level measurement device (5) is tested by an apparatus,
wherein a reflector (13, 49) is mounted by a mounting means onto the process connector (7) at an insertion height inside the container (3) above the medium (1) at which the reflector (13, 49) is inserted into a transmission lobe (15) of the transmitted signals and covers a fraction of a cross-section (17, 51) of the transmission lobe (15) of the transmitted signals, and

- a test and measurement electronic (45),

- for determining the level of the medium (1) based on a transit time ($t_L$) needed for the signals to travel to the surface of the medium (1) and for their echo signals to return to the device (5), and
- for testing the level measurement device (5) based on a transit time ($t_R$, $t_{AR}$) needed for the signals to travel to the reflector (13, 49) and for their echo signals to return to the device (5),

wherein

- the insertion height of the reflector (13) is adjustable,
- level is measured with the measurement device (5) and
- the insertion height of the reflector (13) is adjusted based on the level measured, such that the reflector (13) is located above the previously measured level of the medium (1).


**Patentansprüche**

1. Anordnung zur Messung des Füllstands eines Mediums (1) in einem Behälter (3), bestehend aus:

- einem Füllstandmessgerät (5), bestehend aus:
- einem Prozessanschluss (7) zur Montage des genannten Gerätes auf einer Öffnung des Behälters (3)
- einer Antenne (11) zur Übertragung der Signale in den genannten Behälter (3) und zum Empfang der Echosignale, die durch die Reflexion der übertragenen Signale im Behälter (3) entstehen
- einer Apparatur zum Testen des korrekten Betriebs und/oder der Messgenauigkeit des Füllstandmessgerätes (5), bestehend aus:
- einem Reflektor (13, 49)
- einer auf dem Prozessanschluss (7) angebrachten Montagevorrichtung zur Montage des Reflektors (13, 49) auf einer Einsteckhöhe im Inneren des Behälters (3) und oberhalb des Mediums (1), auf der der Reflektor (13, 49) in einen Sendestrahl (15) der übertragenen Signale hineinreicht und einen Bruchteil eines Querschnitts (17, 51) des Sendestrahls (15) der übertragenen Signale abdeckt, sowie weiterhin bestehend aus
- einer Test- und Messelektronik (45)
- zur Bestimmung des Füllstands des Mediums (1) basierend auf der Laufzeit ($t_L$), die die Signale benötigen, um die Strecke bis zur Oberfläche des Mediums (1) zurückzulegen, und die ihre Echosignale benötigen, um zum Gerät (5) zurückzukehren, sowie
- zum Testen des Füllstandmessgerätes (5) basierend auf der Laufzeit ($T_R$, $T_{AR}$), die die Signale benötigen, um bis zum Reflektor (13, 49) zu gelangen, und die ihre Echosignale benötigen, um zum Gerät (5) zurückzukehren,

die sich dahingehend auszeichnet, dass:

- die Montagevorrichtung eine verlängerte Halterung (21) umfasst, die sich durch den gesamten Prozessanschluss (7) erstreckt und bis in den Behälter (3) hineinreicht,
- ein Abschnitt (23) der genannten Halterung , die bis in den Behälter (3) hineinreicht, in der Länge angepasst werden kann,
- der Reflektor (13) an einem Ende der Halterung (21) im Inneren des Behälters (3) montiert ist, und
- die Einsteckhöhe, an der der Reflektor (13) im Inneren des Behälters (3) angeordnet wird, durch die anpassbare Länge dieses Abschnitts (23) bestimmt wird,

wobei:

- die Montagevorrichtung eine verlängerte Halterung (29) umfasst, die einen Teleskopstab von anpassbarer Länge umfasst, der in den Behälter (3) hineinreicht,
- der Reflektor (13) an einem Ende des Teleskopstabs montiert ist und die anpassbare Länge die Einsteckhöhe des Reflektors (13) bestimmt,

wobei:

- die Montagevorrichtung eine zusammenklappbare Halterung (33) umfasst, bestehend aus:
- Segmenten (35), die durch Scharniere (37) miteinander verbunden sind, um einen zusammenklappbaren Stab zu bilden, und
- einem stabförmigen Abschlusssegment (39), das dauerhaft im Inneren des Behälters (3) angeordnet ist.
- Das Abschlusssegment (39) ist mit dem ersten Ende des zusammenklappbaren Stabs verbunden.

- Es sind Montagevorrichtungen (41) für die Montage der Halterung (33) auf dem Prozessanschluss (7) vorgesehen, bestehend aus:
- einer Öffnung, durch die eine wählbare Zahl von Segmenten (35) durch den Prozessanschluss (7) und in den Behälter (3) eingeführt werden kann, und
- den Segmenten (35e), die sich im Inneren des Behälters (3) befinden und einen geraden Stab bilden.
- Die außerhalb des Behälters (3) angeordneten Segmente (35a, 35b, 35c, 35d) sind zusammengeklappt.
- Der Reflektor (13) ist auf dem Abschlussabschnitt (39) montiert.
- Die Einsteckhöhe, auf der der Reflektor (13) in den Behälter (3) eingesteckt wird, wird durch die ausgewählte Zahl von Segmenten (35e) bestimmt, die in den Behälter (3) eingesteckt werden.

2. Anordnung gemäß Anspruch 1, wobei
es sich bei dem Reflektor (13, 49) um eine flache Scheibe mit einem langen rechteckigen Querschnitt handelt.

3. Anordnung gemäß Anspruch 1, wobei

- zwei Reflektoren (13, 49) auf der Montagevorrichtung auf zwei unterschiedlichen Einsteckhöhen über dem Medium (1) im Inneren des Behälters (3) montiert sind.
- jeder Reflektor (13, 49) in den Übertragungsstrahl (15) der übertragenen Signale eingeführt wird und einen Bruchteil des Querschnitts (17, 51) des Übertragungsstrahls (15) der übertragenen Signale auf Einsteckhöhe abdeckt.
- Beide Reflektoren (13, 49) sind einem Bruchteil des übertragenen Signals ausgesetzt.

4. Anordnung gemäß einem der voranstehenden Ansprüche, wobei es sich bei den Signalen um Mikrowellensignalen handelt.

5. Methode für den Betrieb einer Anordnung zur Messung des Füllstands eines Mediums (1) in einem Behälter (3),

- wobei ein Füllstandmessgerät (5) mithilfe eines Prozessanschlusses (7) auf einer Öffnung des Behälters (3) montiert ist,
- wobei Signale in den genannten Behälter (3) übertragen und Echosignale empfangen werden, die **dadurch** entstehen, dass die übertragenen Signale im Inneren des Behälters (3) von einer Antenne (11) reflektiert werden,
- wobei ein korrekter Betrieb und/oder die Messgenauigkeit des Füllstandmessgerätes (5) mithilfe einer Apparatur geprüft wird
- wobei ein Reflektor (13, 49) mithilfe einer Montagevorrichtung auf dem Prozessanschluss (7) montiert wird, und zwar auf einer Einsteckhöhe im Behälter (3) über dem Medium (1), auf der der Reflektor (13, 49) in einen Übertragungsstrahl (15) der übertragenen Signale eingeführt wird und einen Bruchteil des Querschnitts (17, 51) des Übertragungsstrahls (15) der übertragenen Signale abdeckt, und
- eine Test- und Messelektronik (45),
- zur Bestimmung des Füllstands des Mediums (1) basierend auf der Laufzeit (t$_L$), die die Signale benötigen, um die Strecke bis zur Oberfläche des Mediums (1) zurückzulegen, und die ihre Echosignale benötigen, um zum Gerät (5) zurückzukehren, und
- zum Testen des Füllstandmessgerätes (5) basierend auf einer Laufzeit (T$_R$, T$_{AR}$), die die Signale benötigen, um bis zum Reflektor (13, 49) zu gelangen, und die ihre Echosignale benötigen, um zum Gerät (5) zurückzukehren,

wobei

- die Einsteckhöhe des Reflektors (13) anpassbar ist,
- der Füllstand mit dem Messgerät (5) ermittelt wird und
- die Einsteckhöhe des Reflektors (13) auf der Basis des gemessenen Füllstands angepasst wird, sodass der Reflektor (13) über dem zuvor gemessenen Füllstand des Mediums (1) angebracht wird.

**Revendications**

1. Configuration destinée à la mesure d'un niveau d'un produit (1) dans un réservoir (3), comprenant :

- un dispositif de mesure de niveau (5) comportant :

-- un raccord process (7) pour le montage du dispositif sur une ouverture du réservoir (3),
-- une antenne (11) pour les signaux de transmission dans le réservoir (3) et pour la réception des signaux d'écho résultant des réflexions des signaux transmis à l'intérieur du réservoir (3),

- un appareil destiné à tester le fonctionnement correct et/ou la précision de mesure du dispositif de mesure de niveau (5), comprenant :

-- un réflecteur (13, 49),

-- des moyens de montage montés sur le raccord process (7) destinés au montage du réflecteur (13, 49) à une hauteur d'insertion à l'intérieur du réservoir (3) située au-dessus du produit (1), à laquelle le réflecteur (13,49) est inséré dans un lobe de transmission (15) des signaux transmis et recouvre une petite partie d'une section transversale (17, 51) du lobe de transmission (15) des signaux transmis, et

- une électronique de test et de mesure (45),

-- destinée à la détermination du niveau du produit (1) sur la base d'un temps de propagation (t$_L$) nécessaire pour que les signaux se propagent jusqu'à la surface du produit (1) et pour que leur signaux d'écho retournent au dispositif (5), et
-- destinée à tester le dispositif de mesure de niveau (5) sur la base d'un temps de propagation (t$_R$, t$_{AR}$) nécessaire pour que les signaux se propagent jusqu'au réflecteur (13, 49) et pour que leurs signaux d'écho retournent au dispositif (5),

**caractérisé en ce que**

- les moyens de montage comprennent un support allongé (21) s'étendant à travers le raccord process (7) dans le réservoir (3),
- une longueur d'une section (23) du support (21) s'étendant dans le réservoir (3) est réglable,
- le réflecteur (13) est monté sur une extrémité du support (21) à l'intérieur du réservoir (3), et
- la hauteur d'insertion à laquelle le réflecteur (13) est situé à l'intérieur du réservoir (3) est déterminée par une longueur réglable de cette section (23),

pour lequel

- les moyens de montage comprennent un support allongé (29) comportant une tige télescopique de longueur réglable s'étendant à l'intérieur du réservoir (3),
- le réflecteur (13) est monté sur une extrémité de la tige télescopique, et
- la longueur réglable détermine la hauteur d'insertion du réflecteur (13),

ou pour lequel

- les moyens de montage comprennent un support repliable (33) comportant :

-- des segments (35), qui sont interconnectés par des charnières (37) afin de former une tige repliable, et

-- une section finale (39) en forme de tige, qui se trouve en permanence à l'intérieur du réservoir (3),

- la section finale (39) est connectée à une première extrémité de la tige repliable,

- des moyens de montage (41) sont prévus pour le montage du support (33) sur le raccord process (7), comprenant :

-- une ouverture, à travers laquelle un nombre sélectionnable de segments (35) peuvent être insérés à travers le raccord process (7) dans le réservoir (3),

- les segments (35e) se trouvant à l'intérieur du réservoir (3) forment une tige droite,

- les segments (35a, 35b, 35c, 35d), qui sont situés à l'extérieur du réservoir (3), sont repliés les uns sur les autres,

- le réflecteur (13) est monté sur la section finale (39), et

- la hauteur d'insertion, à laquelle le réflecteur (13) est inséré à l'intérieur du réservoir (3), est déterminée par le nombre sélectionné de segments (35e) insérés dans le réservoir (3).

2. Configuration selon la revendication 1, pour laquelle le réflecteur (13, 49) est un disque plat ayant une section rectangulaire longue et mince.

3. Configuration selon la revendication 1, pour laquelle

- deux réflecteurs (13, 49) sont montés sur les moyens de montage en deux hauteurs d'insertion différentes au-dessus du produit (1) à l'intérieur du réservoir (3),

- chaque réflecteur (13, 49) est inséré dans le lobe de transmission (15) des signaux transmis et recouvre une petite partie de la section transversale (17, 51) du lobe de transmission (15) des signaux transmis à sa hauteur d'insertion, et

- les deux réflecteurs (13 ,49) sont exposés à une fraction du signal transmis.

4. Configuration selon l'une des revendications précédentes, pour laquelle les signaux sont des signaux hyperfréquence.

5. Méthode d'exploitation d'une configuration destinée à la mesure d'un niveau d'un produit (1) dans un réservoir (3),

pour laquelle un dispositif de mesure de niveau (5) est monté sur une ouverture du réservoir (3) au moyen d'un raccord process (7),

pour laquelle les signaux sont transmis dans le réservoir (3) et les signaux d'écho sont reçus en raison des réflexions des signaux transmis à l'intérieur du réservoir (3) par une antenne (11),

pour laquelle un fonctionnement correct et/ou une précision de mesure du dispositif de mesure de niveau (5) sont testés par un appareil,

pour laquelle un réflecteur (13, 49) est monté par les moyens de montage sur le raccord process (7) en une hauteur d'insertion à l'intérieur du réservoir (3) située au-dessus du produit (1), à laquelle le réflecteur (13, 49) est inséré dans un lobe de transmission (15) des signaux transmis et recouvre une petite partie d'une section transversale (17, 51) du lobe de transmission (15) des signaux transmis, et

- une électronique de test et de mesure (45),

-- destinée à la détermination du niveau du produit (1) sur la base d'un temps de propagation ($t_L$) nécessaire pour que les signaux se propagent jusqu'à la surface du produit (1) et pour que leur signaux d'écho retournent au dispositif (5), et

-- destinée à tester le dispositif de mesure de niveau (5) sur la base d'un temps de propagation ($t_R$, $t_{AR}$) nécessaire pour que les signaux se propagent jusqu'au réflecteur (13, 49) et pour que leurs signaux d'écho retournent au dispositif (5),

pour laquelle

- la hauteur d'insertion du réflecteur (13) est réglable,

- le niveau est mesuré à l'aide du dispositif de mesure de niveau (5) et

- la hauteur d'insertion du réflecteur (13) est réglée sur la base du niveau mesuré, de telle sorte que le réflecteur (13) se trouve au-dessus du niveau de produit (1) précédemment mesuré.

Fig. 1

17

21

13

Fig. 2

47

45

5

31

7

29

11

15

13

Fig. 3

Fig. 4

Fig. 5

Fig. 6

Fig. 7

Fig. 8

**EP 2 199 763 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6266022 B1
- US 20050264440 A1
- US 4210969 A
- GB 2443533 A